# EUROPÄISCHE PATENTSCHRIFT

(11) **EP 1 183 904 B1**
(45) Veröffentlichungstag und Bekanntmachung des Hinweises auf die Patenterteilung: **22.10.2003**
(21) Anmeldenummer: 00935105.7
(22) Anmeldetag: 24.05.2000
(51) Int. Cl.: H04R 7/10, H04R 31/00, B32B 31/20

(54) **VERFAHREN ZUR HERSTELLUNG VON MEMBRANEN FÜR ELEKTROAKUSTISCHE WANDLER SOWIE MEMBRANEN**
METHOD FOR PRODUCING MEMBRANES FOR ELECTROACOUSTIC TRANSDUCERS AND MEMBRANES OBTAINED BY THIS METHOD
PROCEDE DE FABRICATION DE MEMBRANES POUR TRANSDUCTEURS ELECTRO-ACOUSTIQUES ET MEMBRANES AINSI OBTENUES

(30) Priorität: 05.06.1999 DE 19925787
(43) Veröffentlichungstag der Anmeldung: 06.03.2002
(73) Patentinhaber: Röhm GmbH & Co. KG, 64293 Darmstadt (DE)
(72) Erfinder: ROOSEN, Dirk, D-64572 Büttelborn (DE); MAIER, Leonhard, D-63110 Nieder-Roden (DE); SEIBERT, Hermann, D-67663 Kaiserslautern (DE)
(86) Internationale Anmeldenummer: EP0004703
(87) Internationale Veröffentlichungsnummer: WO00076269

(56) Entgegenhaltungen:
- EP-A- 0 126 841
- US-A- 4 291 781
- US-A- 4 517 416

## Beschreibung

Die vorliegende Erfindung betrifft Verfahren zur Herstellung von Membranen für elektroakustische Wandler, die eine Poly(meth)acrylimidschaum aufweisende Kernschicht und mindestens eine Deckschicht umfaßt, sowie Membranen für elektroakustische Wandler.

Elektroakustische Wandler oder Lautsprecher sind Vorrichtungen, die in der Lage sind elektrische Wechselströme im Tonfrequenzbereich in hörbaren Schall umzuwandeln. Diese Vorrichtungen sind in der Fachwelt weithin bekannt und beispielsweise in der US-PS 4,928,312, der DE-OS 30 36 876 und DE-OS 22 25 710 beschrieben.

Zur Herstellung dieser Lautsprecher werden Membranen benötigt, die zahlreichen Bedingungen genügen müssen. So sollte das Gewicht der Membran möglichst gering sein, andererseits muß deren Festigkeit relativ hohen Anforderungen genügen, damit sich die Membranen auch bei hohen Frequenzen wie vollkommen steife Kolben verhalten.

So beschreibt beispielsweise die EP-A-0 087 177 eine Membran, die eine Schicht aus Poly(meth)acrylimidschaum aufweist. In dieser Schrift wird ausgeführt, daß die Poly(meth)acrylimid aufweisende Schicht mit einer Deckschicht versehen werden kann. Diese Deckschicht wird bei Raumtemperatur durch Klebstoff aufgebracht, um zu gewährleisten, daß die Dichte der Kernschicht möglichst gering bleibt. Gemäß EP-A-0 087 277 sollte das Produkt aus Dichte und Elastizitätsmodul möglichst gering sein, da dieser Faktor ein Maß für die Qualität der Membran ist.

Die europäische Patentanmeldung EP-A 0 126 841 offenbart eine Lautsprechermembran aus zwei Papierschichten, die durch eine Zwischenschicht aus Kunststoff miteinander ganzflächig verbunden sind. Die Herstellung der Sandwich-Struktur erfolgt dadurch, dass zwischen die Papierschichten ein geschäumter thermoplastischer Kunststoff eingelegt wird und dieser Verbund zwischen beheizten Pressplatten so weit zusammen gedrückt wird, bis die Kunststoff-Zwischenschicht etwa die gleiche bis doppelte Dicke wie eine der Papierschichten aufweist.

Das Versehen von Lautsprechermembranen mit Deckschichten kann viele Gründe haben. Hierzu gehören u.a. eine Erhöhung der Festigkeit der Membran, andererseits können auch ästhetische Gründe ausschlaggebend sein. Das in EP-A-0 087 177 vorgeschlagene Verfahren zur Herstellung von Membranen für akkustische Wandler, die eine Poly(meth)acrylimidschaum aufweisende Kernschicht und mindestens eine Deckschicht umfassen, ist jedoch aufwendig, da es ein Zweistufenverfahren ist. Des weiteren ist es nur für Deckschichten geeignet, die eine faserartige Struktur besitzen, da nur durch diese ein Verflüchtigen von Lösungsmittel aus dem Verbund von Kernschicht und Deckschicht gewährleistet ist.

Des weiteren wurde festgestellt, daß sich die Dekorfolien bei Dauergebrauch leicht von der Kernschicht lösen können, falls diese auf eine besonders glatte Poly(meth)acrylimidschicht aufgebracht werden. Hierbei ist zu bedenken, daß die Membran zwar als steifer Kolben ausgebildet werden sollte, dieses Ziel jedoch nur unvollkommen erreicht werden kann und Schwingungen und Verwindungen innerhalb der Membran unvermeidlich sind. Diese Schwingungen können dazu führen, daß es über einen größeren Zeitraum zu Ablösungen kommt.

In Anbetracht des hierin angegebenen und diskutierten Standes der Technik war es Aufgabe der vorliegenden Erfindung, Verfahren zur Herstellung von Membranen für elektroakustische Wandler zur Verfügung zu stellen, die eine Poly(meth)acrylimidschaum aufweisende Kernschicht und mindestens eine Deckschicht umfassen, die möglichst einfach durchführbar sind.

Eine weitere Aufgabe der Erfindung bestand darin, ein Verfahren zur Herstellung einer Membran für elektroakkustische Wandler zur Verfügung zu stellen, bei dem besonders kurze Zykluszeiten erzielt werden können.

Des weiteren lag der Erfindung die Aufgabe zugrunde, Membranen für elektroakkustische Wandler zu schaffen, die eine Poly(meth)acrylimidschaum aufweisende Kernschicht und mindestens eine Deckschicht umfassen, bei denen die oben genannten Ablöseprobleme der Deckschicht reduziert oder eliminiert werden.

Gelöst werden diese Aufgaben sowie weitere, die zwar nicht wörtlich genannt werden, sich aber aus den hierin diskutierten Zusammenhängen wie selbstverständlich ableiten lassen oder sich aus diesen zwangsläufig ergeben, durch Verfahren zur Herstellung einer Membran für elektroakkustische Wandler, die eine Poly(meth)acrylimidschaum aufweisende Kernschicht und mindestens eine Deckschicht umfaßt, mit allen Merkmalen des unabhängigen Verfahrensanspruchs 1.

Zweckmäßige Abwandlungen des erfindungsgemäßen Verfahrens werden in den auf Anspruch 1 rückbezogenen Unteransprüchen unter Schutz gestellt. Hinsichtlich der Membran für elektroakkustische Wandler liefert der Gegenstand des Anspruchs 8 eine Lösung der der Erfindung zugrundeliegenden Aufgabe.

Beim ersten Gegenstand der vorliegenden Erfindung gelingt es dadurch, daß man die Deckschicht mit der Kernschicht unter Anwendung eines Druckes von ≥ 0,4 MPa und einer Temperatur ≥ 160 °C laminiert, zugleich mindestens die mit der Deckschicht in Kontakt befindliche Seite der Kernschicht verdichtet und anschließend den erhaltenen Verbund auf eine Temperatur unterhalb von 80 °C abkühlt, bevor man den Druck auf Umgebungsdruck erniedrigt, ein Verfahren zur Herstellung einer Membran für elektroakkustische Wandler, die eine Poly(meth)acrylimidschaum aufweisende Kernschicht und mindestens eine Deckschicht umfaßt zur Verfügung zu stellen, durch welches die Deckschicht besonders fest auf die Kernschicht aufgebracht wird.

Beim zweiten Gegenstand der vorliegenden Erfindung gelingt es dadurch, daß die Schälfestigkeit ≥ 10 Nmm/mm, das Elastizitätsmodul ≥ 50 MPa und das Biegefestigkeit ≥ 2 MPa ist, eine Membran für elektroakkustische Wandler, die eine Poly(meth)acrylimidschaum aufweisende Kernsicht und mindestens eine Deckschicht umfaßt, zur Verfügung zu stellen, deren Deckschicht sich auch nach längerem Gebrauch nicht von der Kernschicht löst.

Durch die erfindungsgemäßen Maßnahmen werden u.a. insbesondere folgende Vorteile erzielt:
⇒ Kombination von Verdichten und Laminieren in einem Arbeitsschritt
⇒ Erfindungsgemäße Verfahren ermöglichen sehr kurze Zykluszeiten.
⇒ Durch das erfindungsgemäße Verfahren wird die Deckschicht besonders fest auf die Kernschicht aufgebracht.
⇒ In dem erfindungsgemäßen Verfahren können auch Deckschichten eingesetzt werden, die keine faserartige Struktur aufweisen.
⇒ Über den Verdichtungsgrad der Kernschicht in Verbindung mit der Wahl der Deckschicht läßt sich eine gewünschte Festigkeit des Bauteils über einen weiteren Bereich einstellen.

Das erfindungsgemäße Verfahren ist dadurch gekennzeichnet, daß man die Deckschicht mit der Kernschicht unter Anwendung eines Druckes von ≥ 0,4 MPa und einer Temperatur ≥ 160 °C laminiert, zugleich mindestens die mit der Deckschicht in Kontakt befindliche Seite der Kernschicht verdichtet und anschließend den erhaltenen Verbund auf eine Temperatur unterhalb von 80 °C abkühlt, bevor man den Druck auf Umgebungstemperatur erniedrigt. Dies kann im allgemeinen durch sog. Warmpressverfahren erreicht werden. Diese Verfahren sind in der Fachwelt weithin bekannt, wobei auch spezielle Ausführungsformen, wie beispielsweise Doppelbandpressen, SMC-Pressen und GMT-Pressen von der Erfindung erfaßt werden. Vorzugsweise werden bei dem Preßvorgang Abstandshalter, sogenannte Anschläge verwendet. Diese erleichtern die Einstellung eines erwünschten Verdichtungsgrades der Kernschicht, ohne daß hierdurch eine Beschränkung der Erfindung erfolgen soll.

Bevorzugte Ausführungsformen der erfindungsgemäßen Membran weisen zwei Deckschichten auf, die mit der Kernschicht eine Sandwichstruktur bilden. Die Herstellung einer solchen Membran wird nun anhand der folgenden Figuren dargestellt.

Es zeigen:
Figur 1: die Presse bei Einlegen der Deckschichten und der Kernschicht,
Figur 2: das Aufwärmen auf Verdichtungstemperatur und Schließen auf Kontakt
   und
Figur 3: das Schließen der Presse bei Verdichtungstemperatur.

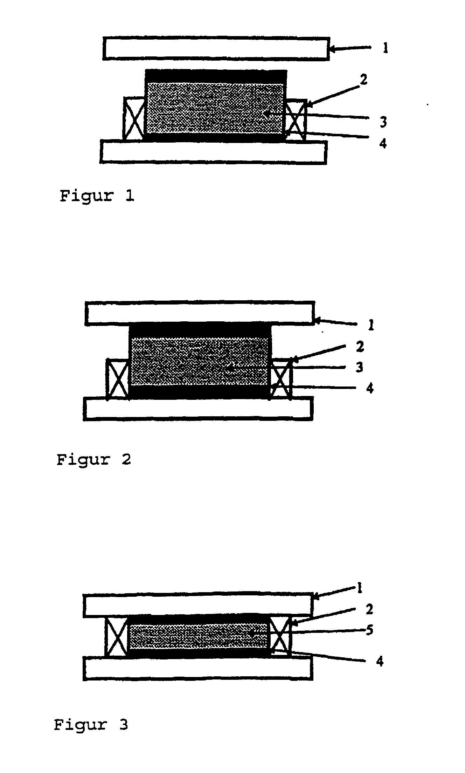

Schematisch zeigen die Figuren 1 bis 3 die Herstellung der erfindungsgemäßen Membran. Zunächst wird die Poly(meth)acrylimidschaum aufweisende Kernschicht (3) zusammen mit den beidseitig aufgelegten Deckschichten (4) in die Presse eingelegt, die heiz- und kühlbare Platten (1) und Anschläge (2) aufweist. Dieser Vorgang kann bei einer Temperatur < als 80 °C geschehen, was in etwa der Entnahmetemperatur des Verbundes von dem Presszyklus zuvor entspricht.

Anschließend wird die Presse auf Kontakt gefahren, was in Figur 2 dargestellt ist. Hierbei wird die Temperatur der Presse auf Verdichtungstemperatur erhöht. Die Verdichtungstemperatur beträgt mindestens 160 °C, sie liegt vorzugsweise in einem Bereich von 165 - 230 °C, ganz besonders bevorzugt im Bereich von 175 - 180 °C. Falls die Temperatur kleiner als 160 °C ist, kann es zu Schädigungen der Porenstruktur des Poly(meth)acrylimid-Hartschaumes kommen.

Sobald diese Temperatur erreicht wird, wird die Presse auf die Anschläge zugefahren, wie dies in Figur 3 dargestellt ist. Hierbei wird die Kernschicht auf den vorgesehenen Verdichtungsgrad verdichtet. Dies ist mit dem Bezugszeichen 5 gekennzeichnet. Der hierfür benötigte Druck beträgt im allgemeinen mindestens 0,4 MPa. Je nach eingestellter Temperatur kann aber auch ein höherer Druck gewählt werden, vorzugsweise liegt er im Bereich von 1 bis 16 MPa. Die Verweilzeit in der Presse wird u.a. von den Aushärtebedingungen des Harzes oder des Klebers bestimmt. Bevor der hergestellte Verbund aus der Presse entnommen werden kann, muß diese mindestens auf eine Temperatur < 80 °C abgekühlt werden, da ansonsten die verdichteten Zellen ihre Ursprungsform annehmen.

Des weiteren ist es möglich den erfindungsgemäßen Verbund auch über eine Erwärmung der äußeren Schichten zur erzeugen. Hierbei wird die Temperatur der Presse direkt auf Verdichtungstemperatur eingestellt, wobei die Presse mit einem Druck > 0,4 MPa, insbesondere von 1 - 16 MPa die Kernschicht verdichtet und gleichzeitig die Deckschichten mit der Kernschicht laminiert wird. Vorzugsweise wird die Presse auf einen Druck von etwa 70 % der Druckfestigkeit des Poly(meth)imidschaums eingestellt.

Die weiteren Schritte entsprechen den zuvor genannten.

Durch das erfindungsgemäße Verfahren wird die Kernschicht vorzugsweise auf eine Dicke kleiner als 90%, vorzugsweise kleiner als 80% bezogen auf die ursprüngliche Dicke, verdichtet. Falls die Verdichtung kleiner ist, haftet in vielen Fällen die Laminierung ohne die Verwendung von besonderen Klebstoffen nicht genügend. Verdichten bedeutet, daß die Poren der Kernschicht verkleinert werden. Hierdurch wird die Festigkeit der Membran wesentlich erhöht, ohne daß hierdurch ihre Eignung für den Einsatz als elektroakustischer Wandler wesentlich beeinträchtigt werden wird.

Die für das Verfahren der Erfindung relevanten Kernschichten weisen Poly(meth)acrylimidschaum auf.

Die Schreibweise (Meth)acryl umfaßt Methacryl, Acryl sowie Mischungen aus beiden.

Poly(meth)acrylimidschäume für Kernschichten von Membranen enthalten wiederkehrende Einheiten, die durch Formel (I) darstellbar sind, 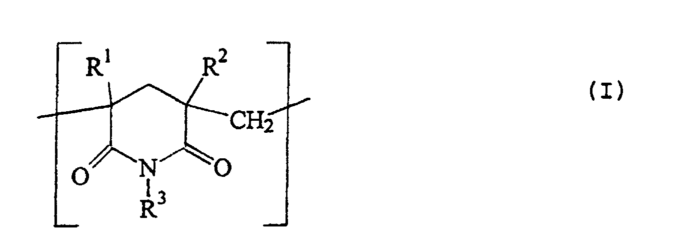 worin
R¹ und R² gleich oder verschieden Wasserstoff oder eine Methylgruppe und
R³ Wasserstoff oder einen Alkyl- oder Arylrest mit bis zu 20 Kohlenstoffatomen, wobei Wasserstoff bevorzugt ist, darstellen.

Vorzugsweise bilden Einheiten der Struktur (I) mehr als 30 Gew.-%, besonders bevorzugt mehr als 50 Gew.-% und ganz besonders bevorzugt mehr als 80 Gew.-% des Poly(meth)acrylimidschaums.

Die Herstellung von erfindungsgemäß einsetzbaren Poly(meth)acrylimid-Hartschaumstoffen ist bekannt und beispielsweise in GB-PS 1 078 425 und 1 045 229, der DE-PS 1 817 156 (= US-PS 3 627 711) oder der DE-PS 27 26 259 (= US-PS 4 139 685) offenbart.

So können sich die Einheiten der Strukturformel (I) unter anderem beim Erhitzen auf 150 bis 250 °C aus benachbarten Einheiten der (Meth)acrylsäure und des (Meth)acrylnitrils durch eine cyclisierende Isomerisierungsreaktion bilden (vgl. DE-C 18 17 156, DE-C 27 26 259, EP-B 146 892). Üblicherweise wird zunächst ein Vorprodukt durch Polymerisation der Monomeren in Gegenwart eines Radikalinitiators bei niedrigen Temperaturen, z. B. 30 bis 60 °C mit Nacherhitzung auf 60 bis 120 °C erzeugt, das dann durch Erhitzen auf ca. 180 bis 250 °C durch ein enthaltenes Treibmittel aufgeschäumt wird (siehe EP-B 356 714).

Hierzu kann beispielsweise zunächst ein Copolymerisat gebildet werden, welches(Meth)acrylsäure und (Meth)acrylnitril vorzugsweise in einem Molverhältnis zwischen 2 : 3 und 3 : 2 aufweist.

Darüber hinaus können diese Copolymerisate weitere Comonomere, wie beispielsweise Ester der Acryl- oder Methacrylsäure, insbesondere mit niedrigen Alkoholen mit 1 - 4 C-Atomen, Styrol, Maleinsäure oder deren Anhydrid, Itakonsäure oder deren Anhydrid, Vinylpyrrolidon, Vinylchlorid oder Vinylidenchlorid verwendet werden. Der Anteil der Comonomeren, die sich nicht oder nur sehr schwer cyclisieren lassen, soll 30 Gew.-%, vorzugsweise 10 Gew.-% nicht übersteigen.

Als weitere Monomere können in ebenfalls bekannter Weise geringe Mengen an Vernetzern, wie z. B. Allylacrylat, Allylmethacrylat, Ethylenglykoldiacrylat oder -dimethacrylat oder mehrwertige Metallsalze der Acryl- oder Methacrylsäure, wie Magnesium-Methacrylat vorteilhaft verwendet werden. Die Mengenanteile können z. B. 0,005 bis 5 Gew.-% betragen.

Des weiteren können die Vorprodukte übliche Zusatzstoffe enthalten. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterrungsschutzmittel und Weichmacher.

Als Polymerisationsinitiatoren werden die an sich für die Polymerisation von Methacrylaten üblichen verwandt, beispielsweise Azoverbindungen, wie Azodiisobutyronitril, sowie Peroxide, wie Dibenzoylperoxid oder Dilauroylperoxid, oder auch andere Peroxidverbindungen, wie beispielsweise t-Butylperoctanoat oder Perketale, wie auch gegebenenfalls Redoxinitiatoren (vgl. hierzu beispielsweise H. Rauch-Puntigam, Th. Völker, Acrylund Methacrylverbindungen, Springer, Heidelberg, 1967 oder Kirk-Othmer, Encyclopedia of Chemical Technology, Vol. 1, Seiten 286 ff, John Wiley & Sons, New York, 1978). Bevorzugt werden die Polymerisationsinitiatoren in Mengen von 0,01 bis 0,3 Gew.-% bezogen auf die Ausgangsstoffe eingesetzt. Günstig kann es auch sein, Polymerisationsinitiatoren mit unterschiedlichen Zerfallseigenschaften bezüglich Zeit und Temperatur zu kombinieren. Gut geeignet ist z. B. die gleichzeitige Verwendung von tert-Butylperpivalat, tert-Butylperbenzoat und tert-Butylper-2-ethylhexanoat.

Zum Aufschäumen des Copolymerisats während der Umwandlung in ein imidgruppenhaltiges Polymer dienen in bekannter Weise Treibmittel, die bei 150 bis 250 °C durch Zersetzung oder Verdampfung eine Gasphase bilden. Treibmittel mit Amidstruktur, wie Harnstoff, Monomethyl- oder N,N'-Dimethylharnstoff, Formamid oder Monomethylformamid, setzen beim Zerfall Ammoniak oder Amine frei, die zur zusätzlichen Bildung von Imidgruppen beitragen können. Es können jedoch auch stickstofffreie Treibmittel wie Ameisensäure, Wasser oder einwertige aliphatische Alkohole mit 3 bis 8 C-Atomen, wie Propanol, Butanol, Isobutanol, Pentanole oder Hexanol, verwendet werden. Treibmittel werden im Reaktionsansatz üblicherweise in Mengen von ca. 0,5 bis 8 Gew.-% bezogen auf die eingesetzten Monomeren verwendet.

Ein ganz besonders bevorzugter einsetzbarer Polymethacrylimid-Schaumstoff kann beispielsweise durch folgende Schritte erhalten werden:
1. Herstellen einer Polymerisatplatte durch radikalische Polymerisation in Gegenwart von einem oder mehreren Initiatoren sowie ggf. weiteren üblichen Zusatzstoffen, die beispielhaft zuvor aufgeführt wurden, hergestellt wird, bestehend aus
   (a) einer Monomermischung aus 40 - 60 Gew.-% Methacrylnitril, 60 - 40 Gew.-% Methacrylsäure und gegebenenfalls bis 20 Gew.-%, bezogen auf die Summe von Methacrylsäure und Methacrylnitril, weiteren monofunktionellen, vinylisch ungesättigten Monomeren
   (b) 0,5 - 8 Gew.-% eines Treibmittelgemisches aus Formamid oder Monomethylformamid und einem einwertigen aliphatischen Alkohol mit 3 - 8 Kohlenstoffatomen im Molekül
   (c) einem Vernetzersystem, welches besteht aus
      (c.1) 0,005 - 5 Gew.-% einer radikalisch polymerisierbaren vinylisch ungesättigten Verbindung mit mindestens 2 Doppelbindungen im Molekül und
      (c.2) 1 - 5 Gew.-% Magnesiumoxid gelöst in der Monomermischung
2. Aufschäumen der Platte bei Temperaturen von 200 bis 260 °C zur Polymethacrylimid-Platte und einer anschließenden
3. Wärmebehandeln in zwei Schritten wobei der erste Schritt aus 2 - 6 Stunden bei 100 - 130 °C und der zweite Schritt aus 32 - 64 Stunden bei 180 -220 °C besteht.

Polymethacrylimide mit hoher Wärmeformbeständigkeit können des weiteren durch Umsetzung von Polymethylmethacrylat oder dessen Copolymeren mit primären Aminen erhalten werden, die ebenfalls erfindungsgemäß einsetzbar sind. Stellvertretend für die Vielzahl an Beispielen für diese polymeranaloge Imidierung seien genannt: US 4 246 374, EP 216 505 A2, EP 860 821. Hohe Wärmeformbeständigkeit läßt sich hierbei entweder durch Einsatz von Arylaminen (JP 05222119 A2) oder durch die Verwendung von speziellen Comonomeren erreichen (EP 561 230 A2, EP 577 002 A1). All diese Reaktionen ergeben jedoch keine Schäume, sondern feste Polymere, die zum Erhalt eines Schaumes in einem separaten zweiten Schritt aufgeschäumt werden müssen. Auch hierfür sind in der Fachwelt Techniken bekannt.

Poly(meth)acrylimid-Hartschaumstoffe können auch kommerziell erhalten werden, wie beispielsweise ®Rohacell von Röhm GmbH, das in verschiedenen Dichten und Größen lieferbar ist.

Die Dichte des Poly(meth)acrylimidschaumes liegt vor der Verdichtung bevorzugt im Bereich von 20 kg/m³ bis 180 kg/m³, besonders bevorzugt im Bereich von 50 bis 110 kg/m³.

Die Kernschicht kann zusätzlich weitere Schichten aufweisen. Vor der Verdichtung liegt die Dicke der Kernschicht im Bereich von 1 bis 100 mm, insbesondere im Bereich von 5 bis 40 und ganz besonders bevorzugt im Bereich von 10 bis 30 mm.

Als Deckschicht kann jedes bekannte flächige Gebilde eingesetzt werden, das bei den zur Herstellung der Membran notwendigen Verarbeitungsparametern, wie Druck und Temperatur, stabil ist. Hierzu gehören u.a. beispielsweise Folien die Polypropylen, Polyester, Polyamid, Polyurethan, Polyvinylchlorid, Polymethyl(meth)acrylat und/oder Metall, wie beispielsweise Aluminium, enthalten. Bevorzugt können des weiteren Matten oder Bahnen verwendet werden, die Glasfasern, Kohlefasern und/oder Aramidfasern umfassen. Als Deckschicht können auch Bahnen eingesetzt werden, die eine mehrschichtigen Aufbau aufweisen.

Bevorzugt können beispielsweise Prepregs eingesetzt werden. Dies sind mit härtbaren Kunststoffen vorimprägnierte Bahnen, meist Glasfasermatten oder Glasfilamentgewebe, die durch Warmpressen zu Formteilen oder Halbzeug verarbeitet werden können. Hierzu gehören u.a. sog. GMT und SMC.

Des weiteren sind auch kohlefaserverstärkte Kunststoff bekannt, die als Deckschichten besonders geeignet sind.

Vorzugsweise liegt die Dicke der Deckschicht im Bereich von 0,05 bis 10 mm, bevorzugt im Bereich von 0,1 bis 5 mm und ganz besonders bevorzugt im Bereich von 0,5 bis 2 mm.

Zur Verbesserung der Haftung kann auch ein Klebstoff eingesetzt werden. Je nach Material der Deckschicht ist dies jedoch nicht notwendig.

Die gemäß dem erfindungsgemäßen Verfahren hergestellten Membranen haben ausgezeichnete mechanische Eigenschaften. So beträgt beispielsweise die Schälfestigkeit gemäß DIN 53295 10 Nmm/mm oder mehr, vorzugsweise mehr als 15 Nmm/mm. Das Elastizitätsmodul gemäß DIN 53 423 ist größer oder gleich 50 MPa, insbesondere größer als 60 MPa.

Des weiteren ist auch die Biegefestigkeit gemäß DIN 53423 mit Werten von 2 MPa oder mehr, insbesondere größer als 2,3 MPa überraschend hoch. Auch die Biegesteifigkeit gemäß DIN 53 293 weist Werte von 8 MPa oder mehr, insbesondere größer als 10 MPa auf.

### Beispiel 1

Auf die Ober- und Unterseite eines Polymethacrylimidschaumstoffs (®ROHACELL 51) mit den Maßen 300 x 300 x 26 mm werden Cytec GFK/EP Prepreg-Lagen (Cycom 69) plaziert. Dieses Paket wird in eine heizbare Presse eingelegt. Anschließend wird die Presse auf Kontakt gefahren und auf 180°C erwärmt. Danach wird die Presse auf 20 mm gefahren, wobei Dickenstops verwendet werden. Im Anschluß daran wird die Presse auf eine Temperatur von 80°C abgekühlt und die fertige Membran entnommen. Der Schältest gemäß DIN 53 295 ergibt einen Wert von 18 Nmm/mm.

### Vergleichsbeispiel 1

Dieses Beispiel wird wie Beispiel 1 durchgeführt, außer daß die Kernschicht nicht verdichtet, d.h. die Presse nicht auf 20 mm gefahren wird. Der Schältest gemäß DIN 53 295 ergibt einen Wert von 6 Nmm/mm.

Die hohe Schälfestigkeit ist insbesondere für Flachmembran-Lautsprecher, auch DML (= Distributed Mode Loudspeaker) genannt, wichtig, da bei diesem Lautsprecherprinzip die Membran in sich selbst schwingt, um Schall zu erzeugen.

## Patentansprüche

1. Verfahren zur Herstellung einer Membran für elektroakustische Wandler, die eine Poly(meth)acrylimidschaum aufweisende Kernschicht und mindestens eine Deckschicht umfaßt,
**dadurch gekennzeichnet, daß**
man die Deckschicht mit der Kernschicht unter Anwendung eines Druckes von ≥ 0,4 MPa und einer Temperatur ≥ 160 °C laminiert, zugleich mindestens die mit der Deckschicht in Kontakt befindliche Seite der Kernschicht verdichtet und anschließend den erhaltenen Verbund auf eine Temperatur unterhalb von 80 °C abkühlt, bevor man den Druck auf Umgebungsdruck erniedrigt.

2. Verfahren gemäß Anspruch 1,
**dadurch gekennzeichnet, daß**
man zur Laminierung mindestens die mit der Deckschicht in Kontakt befindliche Seite der Kernschicht auf eine Temperatur im Bereich von 165 bis 230 °C, insbesondere im Bereich von 175 bis 180 °C, erwärmt.

3. Verfahren gemäß Anspruch 1 oder 2,
**dadurch gekennzeichnet, daß**
man zur Laminierung einen Druck im Bereich von 1 bis 16 MPa einsetzt.

4. Verfahren nach einem oder mehreren der vorhergehenden Ansprüche,
**dadurch gekennzeichnet, daß**
man die Kernschicht auf eine Dicke kleiner als 90%, bezogen auf die ursprüngliche Dicke, verdichtet.

5. Verfahren nach einem oder mehreren der vorhergehenden Ansprüche,
**dadurch gekennzeichnet, daß**
man eine Kernschicht einsetzt, die aus Poly(meth)acrylimidschaum besteht.

6. Verfahren nach einem oder mehreren der vorhergehenden Ansprüche,
**dadurch gekennzeichnet, daß**
man als Deckschicht ein flächiges Gebilde einsetzt, das Kohlefaser, Glasfaser, Aramidfaser, Polypropylen, Polyester, Polyamid, Polyurethan, Polymethyl(meth)acrylat Polyvinylchlorid und/oder Metall enthält.

7. Verfahren nach einem oder mehreren der vorhergehenden Ansprüche,
**dadurch gekennzeichnet, daß**
man zwei Deckschichten einsetzt, um eine Sandwichstruktur zu erhalten.

8. Membran hergestellt nach einem der Ansprüche 1-7 für elektroakustische Wandler, welche Membran eine Poly(meth)acrylimidschaum aufweisende Kernschicht und mindestens eine Deckschicht umfaßt,
**dadurch gekennzeichnet, daß**
die Schälfestigkeit ≥ 10 Nmm/mm, das Elastizitätsmodul ≥ 50 MPa und die Biegefestigkeit ≥ 2 MPa ist.

9. Membran gemäß Anspruch 8,
**dadurch gekennzeichnet, daß**
die Membran zwei Deckschichten aufweist.

## Claims

1. Process for producing a membrane for electroacoustic transducers, which comprises a core layer containing poly(meth)acrylimide foam, and at least one covering layer, **characterised in that** the covering layer is laminated with the core layer under the application of a pressure of ≥ to 0.4 MPa and a temperature ≥ 160°C, and at the same time at least the side of the core layer in contact with the covering layer is compressed and subsequently the composite structure obtained is cooled to a temperature below 80°C before the pressure is lowered to ambient pressure.

2. Process according to claim 1, **characterised in that** for the lamination at least the side of the core layer in contact with the covering layer is heated to a temperature in the range from 165 to 230°C, in particular in the range from 175 to 180°C.

3. Process according to claim 1 or 2, **characterised in that** for the lamination a pressure in the range from 1 to 16 MPa is used.

4. Process according to one or more of the preceding claims, **characterised in that** the core layer is compressed to a thickness of less than 90%, based on the original thickness.

5. Process according to one or more of the preceding claims, **characterised in that** a core layer consisting of poly(meth)acrylimide foam is used.

6. Process according to one or more of the preceding claims, **characterised in that** the covering layer used is a flat structure which contains carbon fibres, glass fibres, aramide fibres, polypropylene, polyester, polyamide, polyurethane, polymethyl(meth)acrylate, polyvinylchloride and/or metal.

7. Process according to one ore more of the preceding claims, **characterised in that** two covering layers are used in order to obtain a sandwich structure.

8. Membrane produced according to one of claims 1 to 7 for electroacoustic transducers, said membrane comprising a core layer containing poly(meth)acrylimide foam and at least one covering layer, **characterised in that** the peel resistance is ≥ 10 Nmm/mm, the modulus of elasticity is ≥ 50 MPa and the bending strength is ≥ 2 MPa.

9. Membrane according to claim 8, **characterised in that** the membrane has two covering layers.

## Revendications

1. Procédé de production d'une membrane pour convertisseur électroacoustique, qui inclut une couche centrale possédant une mousse de poly(méth)acrylimide et au moins une couche de couverture,
**caractérisé en ce qu'**
on lamine la couche de couverture avec la couche centrale en utilisant une pression de ≥ 0,4 MPa, et une température ≥ 160°C, on comprime en même temps au moins le côté de la couche centrale qui se trouve en contact avec la couche de couverture, et ensuite on refroidit le composite obtenu à une température en dessous de 80°C, avant d'abaisser la pression à la pression de l'environnement.

2. Procédé selon à la revendication 1,
**caractérisé en ce qu'**
on chauffe en vue du laminage au moins la face qui se trouve en contact avec la couche de couverture de la couche centrale, à une température dans la plage de 165 à 230°C, en particulier dans la plage de 175 à 180°C.

3. Procédé selon l'une quelconque des revendications 1 ou 2,
**caractérisé en ce qu'**
on met en oeuvre pour le laminage une pression dans la zone de 1 à 16 MPa.

4. Procédé selon l'une quelconque des revendications précédentes,
**caractérisé en ce qu'**
on compacte la couche centrale à une densité inférieure à 90 %, par rapport à la densité d'origine.

5. Procédé selon l'une quelconque des revendications précédentes,
**caractérisé en ce qu'**
on met en oeuvre une couche centrale qui consiste en une mousse de poly(méth)acrylimide.

6. Procédé selon l'une quelconque des revendications précédentes,
**caractérisé en ce qu'**
on met en oeuvre comme couche de couverture un produit plan qui contient des fibres de carbone, des fibres de verre, des fibres d'aramide, du polypropylène, du polyester, un polyamide, un polyuréthane, un poly(méth)acrylate de méthyle, du chlorure de polyvinyle et/ou du métal.

7. Procédé selon l'une quelconque des revendications précédentes,
**caractérisé en ce qu'**
on met en oeuvre deux couches de couverture pour obtenir une structure en sandwich.

8. Membrane produite selon l'une quelconque des revendications 1 à 7, pour un convertisseur électroacoustique, cette membrane comprend une couche centrale possédant une mousse de poly(méth)acrylimide et au moins une couche de couverture,
**caractérisée en ce que**
la résistance à l'écorçage est ≥ 10 Nmm/mm, le module d'élasticité est ≥ 50 MPa et la résistance à la flexion est ≥ 2 MPa.

9. Membrane selon la revendication 8,
**caractérisée en ce que**
la membrane possède deux couches de couverture.
